# EUROPEAN PATENT SPECIFICATION

(11) **EP 2 310 183 B1**
(45) Date of publication and mention of the grant of the patent: **15.05.2013**
(21) Application number: 09761973.8
(22) Date of filing: 10.06.2009
(51) Int. Cl.: B29C 55/02, B29C 71/00, B65D 81/28

(54) **ANTI-MICROBIAL POLYMERIC FILM AND METHOD OF MANUFACTURE OF SAID FILM**
ANTIMIKROBIELLER POLYMERER FILM UND VERFAHREN ZUR HERSTELLUNG DES FILMS
FILM POLYMÈRE ANTIMICROBIEN ET PROCÉDÉ DE FABRICATION DUDIT FILM

(30) Priority: 11.06.2008 GB 0810719
(43) Date of publication of application: 20.04.2011
(73) Proprietor: DuPont Teijin Films U.S. Limited Partnership, Chester, VA 23836 (US)
(72) Inventor: EVESON, Robert, W., Cleveland TS15 9UZ (GB); RAKOS, Karl, Darlington DL1 4RQ (GB); BROWN, David, Guisborough TS14 7AT (GB); SYMONDS, Jackie, North Yorkshire TS9 7AH (GB); STEPHENSON, Debbie, A., Cleveland TS22 5NA (GB); ROBINSON, Julian, Neal, Easby, North Yorkshire TS9 6JH (GB)
(74) Representative: Cockerton, Bruce Roger
(86) International application number: PCT/GB2009/001459
(87) International publication number: WO 2009/150424

(56) References cited:
- EP-A- 0 582 823
- EP-A- 1 097 805
- EP-A- 1 314 550
- WO-A-00/53413
- WO-A-02/055301
- DE-U1- 20 313 065

## Description

The present application is concerned with anti-microbial polymeric film, particularly polyester film.

The preparation of polymeric films having anti-microbial properties is well-known. Such films are of use in the provision of anti-microbial surfaces, for example in medical and catering environments. The anti-microbial properties are imparted using an anti-microbial agent. The preparation of such films typically involves disposing the anti-microbial agent into the polymer matrix or on one or more surface(s) as a coating. Desirably, the anti-microbial agent should have a broad spectrum of activity over different microbes, and a low toxicity profile for higher organisms. Metal ions, particularly silver ions, have long been known to exhibit anti-fungal, anti-bacterial and anti-algal activity (hereinafter referred to as anti-microbial activity). Recently, it has been proposed to use an anti-microbial metal ion supported on zirconium phosphate, as disclosed in, for instance, US-5441717, JP-A-3/83905 and US-5296238. US-5556699 discloses use of a zeolite antibacterial agent in a coextruded or laminated film comprising *inter alia* PVC, polyolefin, polyester and/or polyvinyl alcohol layers, which is useful for packaging foods and medical equipment. US-5639466 discloses a packaging film comprising an anti-bacterial composition of (a) 5-40% lactide or lactic acid oligomer; (b) 0-20% organic plasticiser; and (c) 60-95% lactic acid polymer or copolymer, which is coated as a layer of at least 5 µm in thickness on a polymeric substrate. EP-A-0846418 discloses antibacterial films comprising an inorganic and/or organic antibacterial agent and a hydrophilic substance, which is suitable for use in food packaging.

WO-2004/063254-A discloses an anti-microbial polymeric film comprising a polymeric substrate layer and on a surface thereof a polymeric coating comprising an anti-microbial compound, wherein the polymeric coating also provides heat-sealability and/or barrier properties.

WO-2006/000755-A discloses an anti-microbial polymeric film comprising a polymeric substrate layer which contains 0.05 to 0.7 wt% of a silver-containing anti-microbial compound. The anti-microbial compound is preferably added to the substrate polymer after polymerisation and prior to film formation.

WO 02/05530 A and DE 20313065 U1 describe polymeric films comprising antimicrobial agents.

EP 1097805 A1 discloses a stretched film of thermoplastic resin whose surface layer may contain an antibacterial agent.

It is desired to provide an antimicrobial film having greater anti-microbial efficacy. In addition, anti-microbial agents are relatively expensive and the consumer must generally balance anti-microbial efficacy against cost. It would be desirable to provide more economical anti-microbial films for a given anti-microbial efficacy, or films having greater anti-microbial efficacy for a given cost. It is also desirable for an anti-microbial film to exhibit good optical properties, such as low haze and high gloss, comparable with a film without the anti-microbial agent.

In addition, it is desirable for an anti-microbial film to exhibit excellent durability in that the anti-microbial activity is retained over time. In the prior art anti-microbial films, the anti-microbial agent has a tendency to be lost or abraded from the surface of the film, and this is particularly a problem for those prior art films in which the anti-microbial agent is in particulate form. The inventors have nevertheless observed that it remains desirable for the anti-microbial agent to be present near the surface of the film in order to maximise anti-microbial activity. One of the particular objects of the present invention is to resolve this trade-off and provide a film which shows excellent initial anti-microbial activity as well as excellent retention of anti-microbial activity over time. It is a further object of this invention to provide an anti-microbial film containing a particulate anti-microbial agent which exhibits improved abrasion resistance of the particulate anti-microbial agent.

It is an object of this invention to provide an anti-microbial film which addresses one or more of the afore-mentioned problems.

According to the present invention, there is provided a method of manufacture of an anti-microbial polymeric film, said method comprising:
(a) coextruding a polymeric substrate layer comprising a first layer of a first polymeric material and a second layer of a second polymeric material wherein the crystalline melting temperature (T_{M}2) of said second polymeric material is lower than the crystalline melting temperature (T_{M}1) of the first polymeric material;
(b) stretching the coextruded substrate in a first direction
(c) optionally stretching the substrate layer in a second, orthogonal direction;
(d) disposing on the surface of the polymeric second layer a composition comprising a particulate antimicrobial compound and a liquid vehicle, and preferably also a surfactant; and
(e) heat-setting the stretched film at a temperature above the crystalline melting temperature (T_{M}2) of the second polymeric material but below the crystalline melting temperature (T_{M}1) of the first polymeric material;
wherein step (d) is prior to step (b), or between steps (b) and (c), or after step (c), and before step (e);
such that in the final film said second layer comprises said anti-microbial compound in an amount of from about 1 to about 80 % by weight of said polymeric material of the second layer.

The inventors have found that the application of a particulate antimicrobial compound to a coextruded film during the process of film manufacture provides unexpectedly greater anti-microbial activity than incorporation of the antimicrobial compound into the polymeric material used to make the coextruded fim. Further, the novel manufacturing process allows for the retention of the antimicrobial compound on the film surface.

According to a further aspect of the present invention, there is provided an anti-microbial polymeric film comprising a coextruded stretched and heat-set polymeric substrate layer comprising a first layer of a first polymeric material and a second layer of a second polymeric material, wherein:
(i) the crystalline melting temperature (T_{M}2) of said second polymeric material is lower than the crystalline melting temperature (T_{M}1) of the first polymeric material; and
(ii) said second layer comprises a particulate anti-microbial compound in an amount of from about 1 to about 80 % by weight of said polymeric material of the second layer, wherein said anti-microbial compound is applied via a liquid vehicle to the exposed surface of the second layer prior to heat-setting the coextruded film and wherein at least some of the anti-microbial particles are partially encapsulated by the polymeric material of the second layer so that the particles are held in place by, but not submerged within, the polymeric matrix.

In one embodiment of the present invention, there is provided an anti-microbial polymeric film comprising a coextruded polymeric substrate layer comprising a first layer of a first polymeric material and a second layer of a second polymeric material, wherein:
(i) the crystalline melting temperature (T_{M}2) of said second polymeric material is lower than the crystalline melting temperature (T_{M}1) of the first polymeric material;
(ii) said second layer comprises a particulate anti-microbial compound in an amount of from about 1 to about 80 % by weight of said polymeric material of the second layer; and
(iii) the exposed surface of the second layer exhibits a Surface Area Index of at least 1.10 and/or an Average Surface Slope of at least 6°.

As used herein, the term "anti-microbial" means microbicidal activity or microbe growth inhibition in a microbe population, particularly *Escherichia coli* and/or methicillin-resistant *Staphylococcus aureus* (MRSA; also referred to as multiple-resistant *Staphylococcus aureus*). As used herein, the term "anti-microbial" means a greater than 3 log reduction, preferably a greater than 4 log reduction, and more preferably a greater than 5 log reduction in a population of microbes relative to a control, measured after 24 hours. In a preferred embodiment, the term "anti-microbial" means a greater than 3 log reduction, preferably a greater than 4 log reduction, and more preferably a greater than 5 log reduction in a population of microbes relative to a control, measured after 12 hours, preferably after 6 hours, more preferably after 3 hours. The films disclosed herein represent an improvement over currently commercially available anti-microbial films in that they exhibit a higher log reduction of a microbe population and/or higher kill rates. Antimicrobial activity is measured herein according to "the **standard** method" of JIS Z 2801:2000 as described hereinbelow, and preferably according to the more challenging conditions of "the **scenario** method" of JIS Z 2801:2000 as described hereinbelow.

The anti-microbial agent may be an inorganic or organic compound or a mixture thereof.

The term "inorganic anti-microbial agent" used herein is a general term for inorganic compounds which contain a metal or metal ions, such as silver, zinc, copper and the like which have anti-microbial properties. The metal-containing species may be supported on an inorganic substance such as silica or like metal oxides, zeolite, synthetic zeolite, zirconium phosphate, calcium phosphate, calcium zinc phosphate, ceramics, soluble glass powders, alumina silicone, titanium zeolite, apatite, calcium carbonate and the like. Other metal-containing anti-microbial compounds include mercury acetates and organozinc compounds.

Solid organic anti-microbial agents include 2-bromo-2-nitropropane-1,3-diol (for example, Canguard RTM 409 made by Angus Chemical Co., Buffalo Grove, Illinois, USA); 3,5-dimethyltetrahydro-1,3,5-2H-thiazine-2-thione (for example, Nuosept RTMS made by Creanova, Inc., Piscataway, N.J., USA or Troysan RTM 142 made by Troy Chemical Corp., West Hanover, N.J., USA); N- (trichloromethyl)-thiophthalimide (for example, Fungitrol RTM 11 made by Creanova, Inc.); butyl-p-hydroxy-benzoate (for example, Butyl Parabens RTM made by International Sourcing Inc., Upper Saddle River, N.J., USA); diiodomethyl-p-tolysulfone (for example, Amical RTM WP made by Angus Chemical Co.); and tetrachloroisophthalonitrile (for example, Nuocide RTM 960 by Creanova, Inc.).

With regard to metal-containing anti-microbial agents, silver-containing agents are particularly preferred. Sources of silver for anti-microbial use include metallic silver, silver salts and organic compounds that contain silver. Silver salts include silver carbonate, silver sulfate, silver nitrate, silver acetate, silver benzoate, silver chloride, silver fluoride, silver iodate, silver iodide, silver lactate, silver nitrate, silver oxide and silver phosphates. Organic compounds containing silver may include for example, silver acetylacetonate, silver neodecanoate and silver ethylenediaminetetraacetates. Silver containing zeolites (for example, AJ10D containing 2.5% silver as Ag(I), made by AgION.TM. Tech. L.L.C., Wakefield, Mass., USA) are of particular use. Zeolites are useful because when carried in a polymer matrix they may provide silver ions at a rate and concentration that is effective at killing and inhibiting micro-organisms without harming higher organisms.

In a preferred embodiment, the anti-microbial compound is selected from those disclosed in US-5441717 or US-5296238. Preferably, the anti-microbial compound has formula (I):

M¹ₐH_{b}A_{c}M²₂(PO₄)₃.nH₂O (I)

wherein
M¹ is at least one metal ion selected from silver, copper, zinc, tin, mercury, lead, iron, cobalt, nickel, manganese, arsenic, antimony, bismuth, barium, cadmium and chromium; A is at least one ion selected from an alkali or alkaline earth metal ion;
M² is a tetravalent metal ion;
a and b are positive numbers and c is 0 or a positive number such that (ka + b + mc) = 1;
k is the valence of metal M¹;
m is the valence of metal A; and
0≤n≤6.

Preferably, M¹ is silver and the anti-microbial compound has formula (II):

AgₐH_{b}A_{c}M₂(PO₄)₃.nH₂O (II)

wherein
A is at least one ion selected from an alkali or alkaline earth metal ion;
M is a tetravalent metal ion;
a, b and c are positive numbers such that (a + b + mc) = 1;
m is the valence of metal A; and
0≤n≤6.

The anti-microbial compounds of formula (I) may be prepared according to the methods described in US-5441717 or US-5296238. The anti-microbial silver ion is supported on the zirconium phosphate. The metal A is preferably selected from lithium, sodium, potassium, magnesium and calcium, and is preferably sodium. The metal M is preferably selected from zirconium, titanium and tin, preferably from zirconium and titanium, and is preferably zirconium.

The value of the parameter "a" is preferably at least 0.001, more preferably at least 0.01, and is preferably in the range of 0.01 to 0.5, more preferably 0.1 to 0.5, more preferably 0.10 to 0.30. In one embodiment, the value of the parameter "a" is in the range from 0.4 to 0.5 or in the range 0.15 to 0.25, preferably in the range 0.4 to 0.5.

The value of the parameter "b" is preferably at least 0.2, more preferably in the range of 0.2 to 0.7, more preferably in the range of 0.2 to 0.60. In one embodiment, the value of the parameter "b" is on the range 0.2 to 0.3.

In one embodiment, the antimicrobial compound is selected from Ag_{0.18}Na_{0.57}H_{0.25}Zr₂(PO₄)₃ and Ag_{0.46}Na_{0.29}H_{0.29}Zr₂(PO₄)₃.

Other specific examples of inorganic antibacterial agents are Novaron (product of Toagosei Co., Ltd.), Bactekiller (Kanebo Kasei Co., Ltd.), fine particles of antibacterial spherical ceramics S1, S2, S5 (Adomatex Co., Ltd.), Horonkiller (Nikko Co., Ltd.), Zeomic (Sinagawa Fuel Co., Ltd.), Amenitop (Matsushita Electric Industrial Co., Ltd.), Ionpure (Ishizuka Glass Co. Ltd.) and like silver-based antibacterial agents, Z-Nouve (Mitsui Mining & Smelting Co., Ltd.) and like zinc-based antibacterial agents, P-25 (Nippon Aerosil Co., Ltd.), ST-135 (Ishihara Sangyo Co., Ltd.).

In one embodiment, the particle size of the anti-microbial compound is such that the volume distributed mean particle diameter is in the range of from about 0.1 to about 10 µm, in a further embodiment from about 0.2 to about 2.0 µm, and in a further embodiment from about 0.5 to about 1.5 µm. The antimicrobial particles may, and typically do, become aggregated in the final film and for the avoidance of doubt the particle diameters quoted herein refer to those of the primary, non-aggregated particles.

The anti-microbial compound is present in the second layer in an amount from about 1 to about 80% by weight, in one embodiment from about 15 to about 80 % by weight of the polymeric material of the second layer, and typically at least about 20%, more typically at least about 25%, more typically at least about 30%, more typically at least about 35%, more typically at least about 40%, more typically at least about 45%, and more typically at least about 50% by weight of the polymeric material of the second layer. In one embodiment, the anti-microbial compound is present in the second layer in an amount of no more than about 75 % by weight of the polymeric material of the second layer, in a further embodiment no more than about 70 %, and in a further embodiment no more than about 65% by weight. Thus, the present invention provides a method of disposing very high concentrations of antimicrobial agent into a polymeric film, and such high concentrations are simply not accessible using conventional manufacturing processes which incorporate the antimicrobial additive into the film-forming polymeric material prior to film formation.

In one embodiment, the anti-microbial compound is present in the second layer in an amount from about 1 to about 15% by weight of the total polymeric material of the second layer, and in a further embodiment in the range from about 1 to about 10% by weight of the total polymeric material of the second layer, and in a further embodiment in the range from about 5 to about 10% of the total polymeric material of the second layer.

In a further embodiment, the anti-microbial compound is present at no more than about 2.0% by weight of the total polymeric material of the substrate, and in a further embodiment in the range of from about 0.05% to about 0.7% by weight of the total polymeric material of the substrate.

The particulate anti-microbial compound is disposed in the second layer such that at least some of the anti-microbial particles are exposed in the final film, i.e. partially encapsulated by the polymeric material of the second layer so that the particles are held in place by, but not submerged within, the polymeric matrix. In one embodiment, at least 50%, preferably at least 70%, preferably at least 90%, of the anti-microbial particles are disposed in this way. The film of the present invention is thus characterised in having a very high surface concentration of anti-microbial agent.

The surfaces of the films disclosed herein can suitably be characterised using conventional non-contact interferometry techniques, and in particular on the basis of one or more of the parameters of Average Surface Roughness (Ra), Root Mean Square Average Surface Roughness (Rq), Surface Area Index and/or Average Surface Slope, as defined hereinbelow. In one embodiment, the films of the present invention exhibit a Surface Area Index of at least 1.10, preferably at least 1.15%, preferably at least 1.20, preferably at least 1.25 and preferably at least 1.30; and/or an Average Surface Slope of at least 6°, preferably at least 10°, more preferably at least 15°.

The coextruded polymeric substrate layer is a self-supporting film or sheet by which is meant a film or sheet capable of independent existence in the absence of a supporting base. The substrate comprises two or more discrete layers of the film-forming materials referred to hereinbelow. For instance, the substrate may comprise two, three, four or five or more layers and typical multi-layer structures may be of the AB, ABA, ABC, ABAB, ABABA or ABCBA type. In a preferred embodiment, the substrate comprises only two layers.

The substrate may be formed from any suitable film-forming polymer, including polyolefin (such as polyethylene and polypropylene), polyamide (including nylon), PVC and polyester. In a preferred embodiment, the substrate is polyester, and particularly synthetic linear polyester. The preferred synthetic linear polyesters of the substrate may be obtained by condensing one or more dicarboxylic acids or their lower alkyl (up to 6 carbon atoms) diesters, eg terephthalic acid, isophthalic acid, phthalic acid, 2,5-, 2,6- or 2,7-naphthalenedicarboxylic acid, succinic acid, sebacic acid, adipic acid, azelaic acid, 4,4'-diphenyldicarboxylic acid, hexahydro-terephthalic acid or 1,2-bis-p-carboxyphenoxyethane (optionally with a monocarboxylic acid, such as pivalic acid) with one or more glycols, particularly an aliphatic or cycloaliphatic glycol, e.g. ethylene glycol, 1,3-propanediol, 1,4-butanediol, neopentyl glycol and 1,4-cyclohexanedimethanol. An aromatic dicarboxylic acid is preferred. An aliphatic glycol is preferred. Polyesters or copolyesters containing units derived from hydroxycarboxylic acid monomers, such as ω-hydroxyalkanoic acids (typically C₃-C₁₂) such as hydroxypropionic acid, hydroxybutyric acid, p-hydroxybenzoic acid, m-hydroxybenzoic acid, or 2-hydroxynaphthalene-6-carboxylic acid, may also be used.

In a preferred embodiment, the polyesters used for the substrate layers are selected from polyethylene terephthalate and polyethylene naphthalate, or copolymers based thereon. Polyethylene terephthalate (PET) homopolymers and copolymers are particularly preferred. As used herein the term PET (or PEN) copolymer refers to a copolyester comprising monomeric units derived from ethylene glycol and terephthalic acid (or naphthalene dicarboxylic acid), together with one or more additional glycol(s) and/or one or more additional dicarboxylic acid units.

In a preferred embodiment, the polyester of the first layer is PET.

In a preferred embodiment, the polyester of the second layer is a copolyester comprising monomeric units derived from ethylene glycol and terephthalic acid, together with one or more additional glycol(s) and/or one or more additional dicarboxylic acid(s), particularly those noted above. In a preferred embodiment, the copolyester of the second layer comprises monomeric units derived from terephthalic acid (TA) and isophthalic acid (IPA), with one or more diols (preferably one diol) selected from the group consisting of aliphatic and cycloaliphatic diols, preferably ethylene glycol. Preferably, the molar ratios of the isophthalate polyester units to the terephthalate polyester units are from 1 to 40 mol % isophthalate and from 99 to 60 mol % terephthalate, preferably from 15 to 20 mol % isophthalate and from 85 to 80 mol % terephthalate. In a preferred specific embodiment, the copolyester comprises about 18 mol % ethylene isophthalate and about 82 mol % ethylene terephthalate.

The crystalline melting temperature (T_{M}2) of the polymeric material of the second layer should be lower than the crystalline melting temperature (T_{M}1) of the polymeric material of the first layer, and preferably (T_{M}1 - T_{M}2) is at least 5°C, preferably at least 10°C, preferably at least 20°C, and preferably no more than about 70°C, preferably no more than 60°C and preferably no more than about 50°C. In one embodiment, (T_{M}2) is in the range of from about 200 to about 220°C.

Formation of the substrate is effected by coextrusion, a technique which is well-known in the art, and in accordance with the procedure described below. In general terms the process comprises the steps of extruding a layer of molten polymer, quenching the extrudate and orienting the quenched extrudate in at least one direction.

The substrate may be uniaxially-oriented, but is preferably biaxially-oriented. Orientation may be effected by any process known in the art for producing an oriented film, for example a tubular or flat film process. Biaxial orientation is effected by drawing in two mutually perpendicular directions in the plane of the film to achieve a satisfactory combination of mechanical and physical properties.

In a tubular process, simultaneous biaxial orientation may be effected by extruding a thermoplastics polymer tube which is subsequently quenched, reheated and then expanded by internal gas pressure to induce transverse orientation, and withdrawn at a rate which will induce longitudinal orientation.

In the preferred flat film process, the substrate-forming polymer is extruded through a slot die and rapidly quenched upon a chilled casting drum to ensure that the polymer is quenched to the amorphous state. Orientation is then effected by stretching the quenched extrudate in at least one direction at a temperature above the glass transition temperature of the polyester. Sequential orientation may be effected by stretching a flat, quenched extrudate firstly in one direction, usually the longitudinal direction, i.e. the forward direction through the film stretching machine, and then in the transverse direction. Forward stretching of the extrudate is conveniently effected over a set of rotating rolls or between two pairs of nip rolls, transverse stretching then being effected in a stenter apparatus. Alternatively, the cast film may be stretched simultaneously in both the forward and transverse directions in a biaxial stenter. Stretching is effected to an extent determined by the nature of the polymer, for example polyethylene terephthalate is usually stretched so that the dimension of the oriented film is from 2 to 5, more preferably 2.5 to 4.5 times its original dimension in the or each direction of stretching. Typically, stretching is effected at temperatures higher than the Tg of the polyester, preferably about 15°C higher than the Tg. Greater draw ratios (for example, up to about 8 times) may be used if orientation in only one direction is required. It is not necessary to stretch equally in the machine and transverse directions although this is preferred if balanced properties are desired.

The stretched film is dimensionally stabilised by heat-setting under dimensional restraint. The heat-setting step is normally conducted at a temperature above the glass transition temperature of the polyester but below the melting temperature thereof, to induce crystallisation of the polyester. In the present invention, the temperature of the heat-setting step is below the melting temperature of the first layer but above the melting temperature of the second layer, and should normally also be selected so that it is sufficient to evaporate the liquid vehicle of the anti-microbial coating composition. In the present invention, the first layer typically exhibits relatively high crystallinity and the second layer typically exhibits relatively low crystallinity in the final film, which is a result of the combination of the compositional and process features described herein. In one emdodiment, the heat-setting conditions should be sufficient to evaporate substantially all of said liquid vehicle (i.e. at least 80%, preferably at least 85%, preferably at least 90%, preferably at least 95%, preferably at least 99%). The actual heat-set temperature and duration will therefore vary depending on the composition of the film and coating composition, but should not be selected so as to substantially degrade the mechanical properties of the film. Within these constraints, a heat-set temperature of about 180° to 245°C is generally desirable. The duration of the heat-setting step varies with the speed of the film-web through the heat-setting zone(s), but typical durations are in the range of from about 30 seconds to about 180 seconds, typically from about 100 to about 160 seconds. During the heat-setting, a small amount of dimensional relaxation may be performed in the transverse direction, TD by a procedure known as "toe-in". Toe-in can involve dimensional shrinkage of the order 2 to 8% but an analogous dimensional relaxation in the machine direction (MD) is difficult to achieve since low line tensions are required and film control and winding becomes problematic.

Coextrusion of the multilayer substrate may be effected either by simultaneous coextrusion of the respective film-forming layers through independent orifices of a multi-orifice die, and thereafter uniting the still molten layers, or, preferably, by single-channel coextrusion in which molten streams of the respective polymers are first united within a channel leading to a die manifold, and thereafter extruded together from the die orifice under conditions of streamline flow without intermixing thereby to produce a multi-layer polymeric film, which may be oriented and heat-set as hereinbefore described.

In one embodiment, the substrate is heat-shrinkable. The shrinkage characteristics of a film are determined by the stretch ratios and heat-setting conditions employed during its manufacture, as is well-known to the skilled person. In general, the shrinkage behaviour of a film which has not been heat-set corresponds to the degree to which the film has been stretched during its manufacture. In the absence of heat-setting, a film which has been stretched to a high degree will exhibit a high degree of shrinkage when subsequently exposed to heat; a film which has only been stretched by a small amount will only exhibit a small amount of shrinkage. Heat-setting has the effect of providing dimensional stability to a stretched film, and "locking" the film in its stretched state. Thus, the shrinkage behaviour of a film under the action of heat depends on whether, and to what extent, the film was heat-set after the stretching operation(s) effected during its manufacture. In general, a film which has experienced a temperature T₁ during the heat-setting operation will exhibit substantially no shrinkage below temperature T₁ when subsequently exposed to heat after manufacture. Accordingly, in order to impart shrinkage characteristics, the substrate is not heat-set or partially heat-set at a relatively low temperature and/or using a relatively short duration after stretching has been effected. A shrinkable substrate may exhibit shrinkage in one or both directions of the film. The degree of shrinkage in one dimension may be the same as, or different to, the degree of shrinkage in the orthogonal direction. In one embodiment, the shrinkage is in the range of from about 0 to about 80% when placed in a water bath at 100°C for 30 seconds, in a further embodiment from about 5 to about 80%, and in a further embodiment from about 10 to 60%.

The substrate is suitably of a thickness between about 5 and 350µm, particularly from 12 to about 250 µm, particularly from about 12 to about 125µm, and particularly from about 12 to about 50 µm. In one embodiment, the thickness of the second layer is from about 0.1 to about 30% of the thickness of the total substrate, in a further embodiment from about 0.1 to about 20 %, in a further embodiment from about 0.1 to about 10%, in a further embodiment from about 0.2 to about 5%, and in a further embodiment from about 0.5 to about 2%, of the thickness of the total substrate. In a further embodiment, the thickness of the second layer is in the range of from about 0.1 to about 10 µm, in a further embodiment in the range of from about 0.2 to about 5 µm, and in a further embodiment in the range of from about 0.5 to about 2 µm. In a further embodiment, the thickness of the second layer is controlled as a function of the particle size of a particulate antimicrobial agent. Thus, in one embodiment, the thickness T (in µm) of the second layer is such that the T/D ratio, where D is the volume distributed mean particle diameter (in µm) of the anti-microbial particles is in the range of 0.3 to 10; in a further embodiment in the range of 0.3 to 5; in a further embodiment 0.4 to 4.0; in a further embodiment 0.5 to 3.5; in a further embodiment 0.5 to 2.5; and in a further embodiment 0.6 to 2.0.

The polymeric substrate may conveniently contain any of the additives conventionally employed in the manufacture of polymeric films. Thus, agents such as dyes, pigments, voiding agents, lubricants, anti-oxidants, radical scavengers, UV absorbers, fire retardants, thermal stabilisers, anti-blocking agents, surface active agents, slip aids, optical brighteners, gloss improvers, prodegradents, viscosity modifiers and dispersion stabilisers may be incorporated in the substrate as appropriate. In particular, the substrate may comprise one or more particulate filler(s), such as a particulate inorganic filler or an incompatible resin filler. Particulate inorganic fillers include metal or metalloid oxides, such as alumina, silica and titania, calcined china clay and alkaline metal salts, such as the carbonates and sulphates of calcium and barium. Filler particles, such as Aerosil^{™} OX50 or Seahostar^{™} KEP30 or KEP50, may be present in an amount of from about 0 to about 5%, and more preferably 0.1 to 2.5% by weight relative to the weight of the polymeric material of the layer. The components of the composition of a layer may be mixed together in a conventional manner. For example, by mixing with the monomeric reactants from which the layer polymer is derived, or the components may be mixed with the polymer by tumble or dry blending or by compounding in an extruder, followed by cooling and, usually, comminution into granules or chips. Masterbatching technology may also be employed.

The film preferably has a % of scattered visible light (haze) of <50%, preferably <30%, preferably <15%, preferably <12%, preferably <9%, preferably <6%, more preferably <3.5 % and particularly <2%, measured according to the standard ASTM D 1003. In this embodiment, the substrate is unfilled or filler is typically present in only small amounts, generally not exceeding 0.5% and preferably less than 0.2% by weight of the substrate polymer.

The antimicrobial agent is applied to the substrate in a liquid coating vehicle, which may be an aqueous or organic solution, dispersion or emulsion, but is typically a dispersion, particularly an aqueous dispersion. The coating composition may be manufactured in accordance with conventional procedures. For instance, the anti-microbial agent can be added directly to the coating vehicle under adequate agitation. Alternatively, it can be predispersed or pre-mixed in an appropriate liquid medium, and the pre-dispersed/pre-mixed anti-microbial agent then added to the main coating composition under adequate agitation to ensure uniform distribution. In an aqueous coating composition, surface emulsifiers may be used to help the dispersion of the anti-microbial agent.

A suitable liquid vehicle is water, although non-aqueous organic solvents can also be used, as well as mixtures of water with organic solvents. The liquid vehicle should be sufficiently volatile to be removed during the heat-setting step. In one embodiment, the liquid vehicle is sufficiently volatile that substantially all of said liquid vehicle (i.e. at least 90%, preferably at least 95%, preferably at least 99%) is evaporated during the heat-setting step.

In a preferred embodiment, the coating composition contains a surfactant to assist in the wetting of the substrate surface. Any conventional surfactant may be used, and suitable surfactants include ethoxylated non-ionic, alcohol ethoxylate and alcohol alkoxylate surfactants, such as the alkyl phenol ethoxylates and ethoxylated sorbitan fatty acid derivative surfactants, such as polyoxyethylene sorbitan monolaurate.

The coating is applied to the substrate "in-line", i.e. during the process of film manufacture. The coating may be applied before the stretching operations are conducted or to a stretched substrate. However, application of the coating composition is preferably effected during the stretching operation(s). Thus, the coating is preferably applied to the film substrate between the two stages (longitudinal and transverse) of a biaxial stretching operation, i.e. it is applied as an "inter-draw" coating. Thus, the film substrate may be stretched firstly in the longitudinal direction over a series of rotating rollers, coated with the coating composition, and then stretched transversely in a stenter oven, prior to heat-setting. The coating composition may be applied to the polymer film by any suitable conventional coating technique such a gravure roll coating, reverse roll coating, dip coating, bead coating, slot coating, electrostatic spray coating, extrusion coating or melt coating. Prior to deposition of the coating composition onto the substrate, the exposed surface thereof may, if desired, be subjected to a chemical or physical surface-modifying treatment, as are well-known in the art, in order to improve the bond between that surface and the subsequently applied coating. Physical surface-modifying treatments include flame treatment, ion bombardment, electron beam treatment, ultra-violet light treatment and corona discharge.

The coating composition is applied to the substrate at a wet coat-weight in the range of from about 0.5 to about 50 µm.

The coating vehicle of the coating composition is normally substantially removed in the heat-setting step of the film-manufacturing process described hereinabove.

The combination of process conditions and compositional features used in the present invention allows the anti-microbial agent to become at least partially encapsulated in the molten polymeric material of the second layer of the substrate during the heat-setting step of the manufacturing process. The wetting/bonding interaction which takes place during the heat-setting step results in a film in which the particulate antimicrobial agent is held very firmly in place by the polymer matrix. Analysis of the film surface by scanning electron microscopy (SEM) demonstrates that the anti-microbial agent is held on or just below the surface of the polymer matrix in the final film, and presents a markedly different surface profile compared to a film which has been manufactured using a similar amount of antimicrobial agent incorporated into the polymer prior to film manufacture.

If desired, slight pressure may be applied over the layer of the particulate additive to impress the particles into the second layer, and such pressure may typically be applied in the stenter, and typically just prior to the transverse stretching stage. Excess particulate additive which has not bonded or penetrated into the second layer may be removed from the surface thereof, e.g. by inverting the coated substrate, by dispersing the particles with a blast of air, or by brushing or washing the particles away. The coated substrate may be allowed to cool in air or may be quenched to complete the bonding of the particles to the second layer and the cooling or quenching operation may be effected either before or after any excess particles have been removed from the surface of the film.

In one embodiment, the anti-microbial film comprises a coating layer disposed on the surface of the first layer which is remote from the co-extruded second layer, and this coating layer is a barrier coating layer which is sufficient to provide a barrier to water vapour and/or oxygen. In one embodiment, the coating is sufficient to provide a water vapour transmission rate in the range of 0.01 to 10g/100 inches²/day, preferably 0.01 to 0.1g/100 inches²/day, and in one embodiment 0.1 to 1.0g/100 inches²/day, and/or an oxygen transmission rate in the range of 0.01 to 10 cm³/100 inches²/day/atm, preferably 0.01 to 1 cm³/100 inches²/day/atm, and in one embodiment 0.1 to 1 cm³/100 inches²/day/atm. Suitable coat weights are in the range of 0.01 to 14 g/m², preferably 0.02 to 1.5 g/m². Conventional barrier coatings include PVDC, PCTFE, PE, PP, EVOH and PVOH. PVDC layers are particularly suitable for providing a barrier to both gas and water vapour; EVOH and PVOH layers are particularly suitable for providing a barrier to gas; while PCTFE, PE and PP layers are particularly suitable for providing a barrier to water vapour. Suitable layers are known in the art and are disclosed, for instance, in US-5328724 (EVOH), US-5151331 (PVDC), US-3959526 (PVDC), US-6004660 (PVDC and PVOH). Suitable PVDC polymeric layers are copolymers of 65 to 96% by weight of vinylidene chloride and 4 to 35% of one or more comonomers such as vinyl chloride, acrylonitrile, methacrylonitrile, methyl methacrylate, or methyl acrylate, and are generally referred to as saran. A suitable grade contains about 7 weight percent methacrylonitrile, 3 weight percent methyl methacrylate, and 0.3 weight percent itaconic acid comonomers.

In a further embodiment, the anti-microbial film comprises a coating layer disposed on the surface of the first layer which is remote from the co-extruded second layer, and this coating layer is a sealant coating layer sufficient to provide a heat-seal strength of from 100 g/in to 2500 g/in when heat-sealed to itself according to the test method described herein. Preferably the, heat-seal strength is at least about 300 g/in, preferably at least 500 g/in, preferably at least 750 g/in. Suitable coat weights are in the range of 0.5 to 14 g/m², preferably 1.0 to 10 g/m². Suitable heat-sealable or sealant coatings include ethylene vinyl acetate (EVA), amorphous polyesters (APET), olefinic polymers such as polyethylene (PE), caprolactone, acid copolymers such as ethylene methacrylic acid (EMAA), ionomers such as Surlyn, and styrenic copolymers such as styrene isoprene styrene (SIS). Suitable layers are well-known in the art. US-4375494 and US-6004660 describe amorphous copolyester sealant layers. Suitable copolyesters may comprise an aromatic dicarboxylic acid and an aliphatic dicarboxylic acid. Suitable aromatic dicarboxylic acids include terephthalic acid, isophthalic acid, phthalic acid, or 2,5-, 2,6- or 2,7-naphthalenedicarboxylic acid, and suitable aliphatic dicarboxylic acids include succinic acid, sebacic acid, adipic acid, azelaic acid, suberic acid or pimelic acid. A preferred aromatic dicarboxylic acid is terephthalic acid. Preferred aliphatic dicarboxylic acids are selected from sebacic acid, adipic acid and azelaic acid. A particularly preferred aliphatic diacid is sebacic acid. The concentration of the aromatic dicarboxylic acid present in the copolyester is preferably in the range from 40 to 80, more preferably 45 to 65, and particularly 50 to 60 mole % based on the dicarboxylic acid components of the copolyester. The glycol component of the copolyester of the coating layer preferably contains from 2 to 8, more preferably 2 to 4 carbon atoms. Suitable glycols include ethylene glycol, 1,3-propanediol, 1,3-butane diol, 1,4-butanediol, 1,5-pentane diol, neopentyl glycol, 2,2-dimethyl-1,3-propanediol, diethylene glycol, triethylene glycol and 1,4-cyclohexanedimethanol. An aliphatic glycol, particularly ethylene glycol or 1,4-butanediol, is preferred. In a particularly preferred embodiment, the aliphatic glycol is 1,4-butanediol. Such copolyesters preferably have a glass transition point of less than 10°C, more preferably less than 0°C, particularly in the range from -50°C to 0°C, and especially -50°C to -10°C, and a melting point in the range from 90°C to 250°C, more preferably 110°C to 175°C, and particularly 110°C to 155°C. Particularly preferred examples of such copolyesters are (i) copolyesters of azeleic acid and terephthalic acid with an aliphatic glycol, preferably ethylene glycol; (ii) copolyesters of adipic acid and terephthalic acid with an aliphatic glycol, preferably ethylene glycol; and (iii) copolyesters of sebacic acid and terephthalic acid with an aliphatic glycol, preferably butylene glycol. Preferred polymers include a copolyester of sebacic acid/terephthalic acid/butylene glycol (preferably having the components in the relative molar ratios of 45-55/55-45/100, more preferably 50/50/100) having a glass transition point (Tg) of -40°C and a melting point (Tₘ) of 117°C), and a copolyester of azeleic acid/terephthalic acid/ethylene glycol (preferably having the components in the relative molar ratios of 40-50/60-50/100, more preferably 45/55/100) having a T_{g} of -15°C and a Tₘ of 150°C. Suitable EVA polymers may be obtained from DuPont as Elvax^{™} resins. Typically, these resins have a vinyl acetate content in the range of 9% to 40%, and typically 15% to 30%.

In a further embodiment, the anti-microbial film comprises a coating layer disposed on the surface of the first layer which is remote from the co-extruded second layer, and this coating layer provides both barrier and heat-seal properties, and PVDC coatings are suitable in this regard

The barrier and/or sealant coating layer may be applied to the first layer of the substrate which is remote from the co-extruded second layer either in-line (e.g. by a conventional two-sided in-line coating process) or off-line. The coating may be applied to an already-oriented substrate. However, application of a coating composition is preferably effected before or during the stretching operation(s), as described hereinabove. The coating composition may be applied to the polymer film substrate in aqueous or organic solution, in a dispersion or in an emulsion, suitably in neat form, by any suitable conventional coating technique, such as those described hereinabove. Prior to deposition of a coating composition onto the substrate, the exposed surface thereof may be subjected to a surface-modifying treatment as those described hereinabove. The barrier and/or sealant coating layer typically has a thickness in the range of about 0.01 to 14.0 µm. In one embodiment, the coating thickness is no more than about 5 µm, preferably no more than about 4 µm, preferably no more than about 2 µm, and preferably no more than about 1 µm. Preferably, the coating layer is in the range of about 0.02 to about 1.5 µm, preferably 0.02 to about 1.0 µm. In one embodiment, the coating layer thickness is 0.5 microns or greater.

The films described herein may be used to provide an anti-microbial surface in a variety of applications, such as in medical and catering environments and equipment, and in food packaging. Other applications include restrooms, garbage disposals, animal feed troughs, schools, swimming pool areas, automobile fixtures, public access fixtures, public seating, public transportation fixtures, toys, and other industrial, agricultural, commercial or consumer products.

The following test methods may be used to determine certain properties of the polymeric film:
(i) Haze (% of scattered transmitted visible light) is measured using a Gardner Hazegard System XL-211, according to ASTM D 1003.
(ii) Water vapour transmission rate is measured according to ASTM D3985.
(iii) Oxygen transmission rate is measured according to ASTM F1249.
(iv) Anti-microbial activity was assessed principally according to the JIS Z 2801: 2000, and this is referred to herein as "the **standard** method". An aliquot (400µl) of a log phase cell suspension of either *E coli* (7.6 x 10⁵ cells/ml; ATCC 8739) or *MRSA* (7.7 x 10⁵ cells/ml; NCTC 11939) prepared using the method described in JIS Z 2801 were held in intimate contact with each of three replicates of the test surfaces supplied using a 40 x 40 mm polyethylene film (cut from a sterile Stomacher bag) for 24 hours at 35°C. The size of the surviving population was determined using the method described in JIS Z 2801. The viable cells in the suspension were enumerated by spiral dilution onto Trypcase Soya Agar and by the pour plate method described in JIS Z 2801. These plates were then incubated at 35°C for 24 hours and then counted. An additional three replicate unfortified surfaces were also inoculated in the manner described above but were then analysed immediately for the size of microbial population present to provide zero-time control data. All data were converted to colony forming units (CFU) / cm² and then transformed to provide a dataset that conformed to a Gaussian distribution. Statistical significance of any effects detected was tested by analysis of variance (ANOVA; P = 0.05) and the confidence intervals of the means was calculated and displayed as Box and Whisker plots. Differences between individual means were analysed by the Least Significant Difference (LSD) method during the ANOVA calculations.
Antibacterial activity can also be assessed using a modified version of JIS Z 2801: 2000 in which the impact of a treated system on a microbial population delivered as a splash of a contaminated liquid (or as a residue of a contaminated liquid) can be studied, and this is referred to herein as "the **scenario** method". Both the exposure conditions (temperature & humidity) and the liquid employed were varied, relative to the standard method. Thus, an aliquot (100µl) of a log phase cell suspension of either MRSA (6.2 x 10⁶ cells/ml) or E coli (4.6 x 10⁶ cells/ml) suspended in either sterile 1.5% BSA (bovine serum albumin) , sterile distilled water or sterile artificial urine solution (19.4 g urea, 8.0 g sodium chloride, 0.6 g calcium chloride, 1.0 g magnesium sulphate and 971.0 g sterile distilled water) were inoculated onto replicate samples and left uncovered for up to 24 hours at 20°C and 65% relative humidity. The size of the surviving population on replicate (3) samples selected at random from those inoculated as above was determined at intervals of 3, 6, 12 and 24 hours using the method described in JIS Z 2801. The remainder of the test method proceeds in accordance with the description given above for the standard method.
(vi) Heat-seal strength is measured by heat-sealing a film sample to itself (coating layer contacted with coating layer) at 250°F under 30 psi with 0.35 seconds dwell time in a Sentinel^{®} apparatus.
(vii) Shrinkage is measured by placing a film sample (a strip of approximately 1 inch) in a water bath at 100°C for 30 seconds and the difference in length before and after heat treatment used to calculate the shrinkage.
(viii) The durability of the films was assessed using a variety of methods. Thus, durability can be assessed by an accelerated ageing test using a dishwasher (hereinafter referred to as "the dishwasher test"). Samples were exposed to repeated 40°C cycles in a dishwasher, and antimicrobial activity was tested prior to the ageing test and then after 10 cycles, 20 cycles, 40 cycles and 60 cycles using the "Standard Test above.
In addition, simple adhesion tests and rub-resistance tests involving visual inspection can also usefully be used to assess durability. The methods used are described in Table 1 below.

**Table 1**

| **Test** | **Test Description** |
|---|---|
| **Adhesion (TESA)** | TESA 4104 tape is placed on the surface of the coating and peeled off quick by hand. Qualitative visual observation is made of the amount AM coating that remains on surface and compared to that before the tape peel |
| **Dry rub resistance** | Sample is rubbed (10 rubs) with white KimTech^{™} science tissue. The coating after rubbing is compared to that before rubbing and any changes in appearance noted |
| **Wet rub resistance** | Sample is rubbed (10 rubs) with white KimTech^{™} science tissue. The coating after rubbing is compared to that before rubbing and any changes in appearance noted |
| **IPA rub resistance** | Sample is rubbed (10 rubs) with white KimTech^{™} science tissue, soaked in IPA (iso-propyl alcohol). The coating after rubbing is compared to that before rubbing and any changes in appearance noted. |
| | |
| **Domestos^{™} rub resistance Test A** | Sample is rubbed (10 rubs) with white KimTech^{™} science tissue coated with 10% DOMESTOS solution in water. The sample is rinsed with tap-water, followed with a wipe with a wet KimTech tissue to remove residual stains left by DOMESTOS |
| **Domestos^{™} rub resistance Test B** | Sample is rubbed (100 rubs) with blue cloth coated with 10% DOMESTOS solution in water, then rinsed with tap-water followed with a wipe with a wet KimTech^{™} tissue to remove residual stains left by DOMESTOS |

(ix) Crystalline melting temperature (T_{M}) was measured using differential scanning calorimetry (DSC) according to ASTM E794.
(x) The volume distributed median particle diameter is the equivalent spherical diameter corresponding to 50% of the volume of all the particles, read on the cumulative distribution curve relating volume % to the diameter of the particles - often referred to as the "D(v,0.5)" value. The median particle size may be determined by plotting a cumulative distribution curve representing the percentage of particle volume below chosen particle sizes and measuring the 50th percentile. The parameter may be measured using a Coulter LS230 particle sizer (Coulter Electronics Ltd, Luton, UK).
(xi) Measurement of the silver content of the films, and therefore the content of the antimicrobial agent in the final film, is achieved as follows. The samples are initially digested in nitric acid in a pressurised microwave digestion system. Insoluble material present in these digests was filtered off prior to measurement. A fresh portion of each sample was then dissolved in boiling sulphuric acid and oxidised with hydrogen peroxide, and this preparation route provided clear digests with no evidence of insoluble material. The silver content of each digest was determined by Inductively Coupled Plasma-Optical Emission Spectrometry (ICP-OES) with reference to freshly prepared, matrix matched standards. Both preparation routes yielded similar results.
(xii) Surface Smoothness
Surface smoothness was measured using conventional non-contacting, white-light, vertical phase-shifting interferometry techniques, which are well-known in the art. The instrument used was a Wyko NT9800 surface profiler using a light source of wavelength 604nm. With reference to the WYKO Surface Profiler Technical Reference Manual (Veeco Process Metrology, Arizona, US; June 2007; the disclosure of which is incorporated herein by reference), the characterising data obtainable using the technique include:
**Averaging Parameter - Roughness Average (Ra) :** the arithmetic average of the absolute values of the measured height deviations within the evaluation area and measured from the mean surface.
**Averaging Parameter - Root Mean Square Roughness (Rq) :** the root mean square average of the measured height deviations within the evaluation area and measured from the mean surface.
**Extreme Value Parameter - Maximum Profile Peak Height (Rp) :** the height of the highest peak in the evaluation area, as measured from the mean surface.
**Averaged Extreme Value Parameter - Average Maximum Profile Peak Height (Rpm) :** the arithmetic average value of the ten highest peaks in the evaluation area.
**Surface Area Index :** a measure of the relative flatness of a surface.
**Average Surface Slope:** a measure of the average gradient of the peaks of a surface, which is calculated on the basis of the average slope between neighbouring pixels in each of the x and y directions over the sampled area.

The roughness parameters and peak heights are measured relative to the average level of the sample surface area, or "mean surface", in accordance with conventional techniques. (A polymeric film surface may not be perfectly flat, and often has gentle undulations across its surface. The mean surface is a plane that runs centrally through undulations and surface height departures, dividing the profile such that there are equal volumes above and below the mean surface.) The surface profile analysis is conducted by scanning discrete regions of the film surface within the "field of view" of the surface profiler instrument, which is the area scanned in a single measurement. A film sample may be analysed using a discrete field of view, or by scanning successive fields of view to form an array. The analyses conducted herein utilised the full resolution of the Wyko NT9800 surface profiler, in which each field of view comprises 480 x 640 pixels. For the measurement of Ra, Rq, Rpm, Rp and Surface Area Index, the resolution was enhanced using an objective lens having a 50-times magnification. The resultant field of view has dimensions of 94 µm x 126 µm, with a pixel size of 0.1968 µm. Such adjacent fields of view consisting of 156 individual measurements were then combined (or "stitched"; 20% overlap of the measurement areas) to form a single, larger field of view of dimensions 1.0 mm x 1.2 mm. This was repeated three times to provide statistically reliable surface roughness parameters. For the measurement of surface slope, the average value was determined using 20 individual measurements
The **Surface Area Index** is calculated from the "3-dimensional surface area" and the "lateral surface area" as follows. The "3-dimensional (3-D) surface area" of a sample area is the total exposed 3-D surface area including peaks and valleys. The "lateral surface area" is the surface area measured in the lateral direction. To calculate the 3-D surface area, four pixels with surface height are used to generate a pixel located in the centre with X, Y and Z dimensions. The four resultant triangular areas are then used to generate approximate cubic volume. This four-pixel window moves through the entire data-set. The lateral surface area is calculated by multiplying the number of pixels in the field of view by the XY size of each pixel. The surface area index is calculated by dividing the 3-D surface area by the lateral area, and is a measure of the relative flatness of a surface. An index which is very close to unity describes a very flat surface where the lateral (XY) area is very near the total 3-D area (XYZ).
A **Peak-to-Valley** value, referred to herein as "PV₉₅", may be obtained from the frequency distribution of positive and negative surface heights as a function of surface height referenced to the mean surface plane. The value PV₉₅ is the peak-to-valley height difference which envelops 95% of the peak-to-valley surface height data in the distribution curve by omitting the highest and lowest 2.5% of datapoints. The PV₉₅ parameter provides a statistically significant measure of the overall peak-to-valley spread of surface heights.
The **Average Surface Slope** is calculated herein on the basis of Ra values and determining all of the individual pixel-to-pixel, two-point slopes in each of the x and y directions. The angle of each two-point slope is assessed by calculating tan⁻¹ (i.e. arctan) of the difference in pixel heights (i.e. the "opposite side" to the slope angle) divided by the lateral separation (i.e. the "adjacent side' to the slope angle). The value for average surface slope herein is the arithmetic mean of the x and y values.

The invention is further illustrated by the following examples. It will be appreciated that the examples are for illustrative purposes only and are not intended to limit the invention as described above. Modification of detail may be made without departing from the scope of the invention.

### EXAMPLES

### Example 1

A coating composition was prepared as an aqueous dispersion (17% total solids) of the anti-microbial agent Alphasan^{™} RC2000 (Milliken (UK); particle size of 1.0µm; contains silver at 10 wt%) by mixing the following ingredients:
(i) 825 grams of Alphasan^{™} RC2000
(ii) 250 grams of a 10% aqueous solution of 25g Caflon^{™} NP10 surfactant (Univar, UK);
(iii) demineralised water to make the composition up to 5000 g.

The surfactant is placed in a suitably sized beaker and the water is added with sufficient stirring from a magnetic stirrer to generate a vortex, followed by slow addition of the Alphasan. The mixture is further mixed at high shear rates using an Ultra-Turrax machine at a speed of 357 rpm for 30 minutes.

A polymer composition comprising PET (which makes up the "first layer" as defined herein) was co-extruded with a copolyester comprising terephthalic acid/isophthalic acid/ethylene glycol (82/18/100) (which makes up the "second layer" as defined herein), cast onto a cooled rotating drum, pre-heated to a temperature of 80 to 81°C and stretched in the direction of extrusion to approximately 3.4 times its original dimensions. The anti-microbial coating composition was then applied by offset-gravure coating at a line-speed of 90% (i.e. the tangential velocity of the gravure roller was 90% of the film-web speed) to a wet coat-weight of about 15.9 µm. The film was heated to a temperature of about 95°C, passed into a stenter oven at a temperature of 110°C where the film was stretched in the sideways direction to approximately 3.6 times its original dimensions. The biaxially-stretched film was heat-set by successive heating in three zones of defined temperature (225, 220 and 200°C) by conventional means at a film-web speed of 11.9 m/min; approximate residence time in each of the three zones was 40 seconds The total thickness of the final film was 100 µm, and the copolyester second layer was approximately 0.8 µm thick.

The amount of particulate antimicrobial agent in the final film was 4340 ppm by weight of the total polymeric material of the substrate, giving a silver content of 434 ppm by weight of the total polymeric material of the substrate. The amount of particulate antimicrobial agent in the second layer of the final film was 54% by weight of the total polymeric material of the second layer. An SEM analysis showed the antimicrobial particles to be protruding from the second layer with significant amounts of agglomeration and with high surface concentration.

### Examples 2, 3 and 4

The procedure of Example 1 was repeated except that (i) the thickness of the copolyester layer was varied; and (ii) the three heat-setting zones were at temperatures of 205, 220 and 220°C, respectively, and about 6-7% relaxation was applied during heat-setting. Wyko and SEM analyses showed that the antimicrobial particles were protruding from the second layer with significant amounts of agglomeration and with high surface concentration. The Examples are characterised in Table 2 below:

**Table 2**

| **Example** | **Thickness of 2^{nd} layer** | **AM agent content by wt of total polymer of substrate** | **AM agent content by wt of polymer of 2^{nd} layer** |
|---|---|---|---|
| 2 | 1.25 µm | 3680 ppm | not determined |
| 3 | 0.6 µm | 2370 ppm | not determined |
| 4 | 1.8 µm | 3160 ppm | 58% |

### Example 5

The procedure of Example 1 was repeated using a line-speed of 70%.

### Comparative Examples 1 and 2

A coextruded two-layer film was prepared substantially in accordance with Example 1 except that (i) both layers of the film were PET; (ii) the pre-heater and sideways draw temperatures were 85°C and 100°C respectively; (iii) the three heat-setting zones were at temperatures of 195, 210 and 195°C, respectively; (iv) the thickness of the second layer was 4 µm; and (v) the antimicrobial agent was instead introduced into the second layer by addition to the molten polymer prior to film manufacture at levels of 20,000ppm (2%; comparative example 1) and 80,000ppm (8%; comparative example 2). These films showed poor antimicrobial activity. Surface analyses indicated that the antimicrobial agent was not proximate to the surface.

### Comparative Example 3

A coextruded two-layer film was prepared substantially in accordance with Example 1 except that (i) the thickness of the second layer was 1 µm; and (ii) the antimicrobial agent was instead introduced into the second layer by addition to the molten polymer prior to film manufacture at levels of 50,000ppm (5%). The antimicrobial activity observed was poor. Wyko and SEM analyses showed the antimicrobial particles to be well submerged in the second layer polymer matrix with little agglomeration, and much lower surface concentration when compared to Example 1.

### Comparative Example 4

A coextruded two-layer film coated with an antimicrobial composition was prepared in the manner of Example 1 except that (i) both layers of the substrate were PET homopolymer; (ii) the thickness of the second layer was 1 ; and (iii) the line-speed was 80% to give a wet coat-weight of about 13.3 µm. The antimicrobial activity observed was poor. The antimicrobial particles were not well-bound and the film was very friable.

The antimicrobial activity of the above films was measured and the results are shown in Tables 3 and 4 below. The data in Table 3 were collected using a test based on JIS Z 2801 : 2000. The data in Table 4 were collected using the "scenario method" described herein (a modified version of JIS Z 2801 : 2000). The films according to the invention all show excellent antimicrobial efficacy, and superior to the films of the comparative examples.

The durability of Examples 1, 3 and 4 were tested against Comparative Example 4 using the tests described herein, and the results are shown in Table 5 below. The films according to the present invention exhibit superior durability.

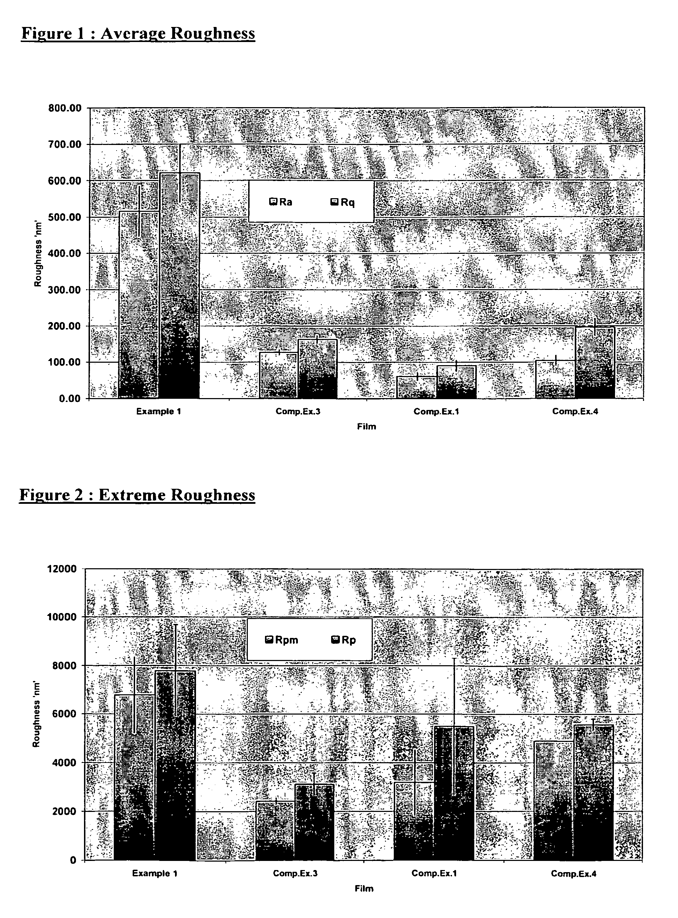

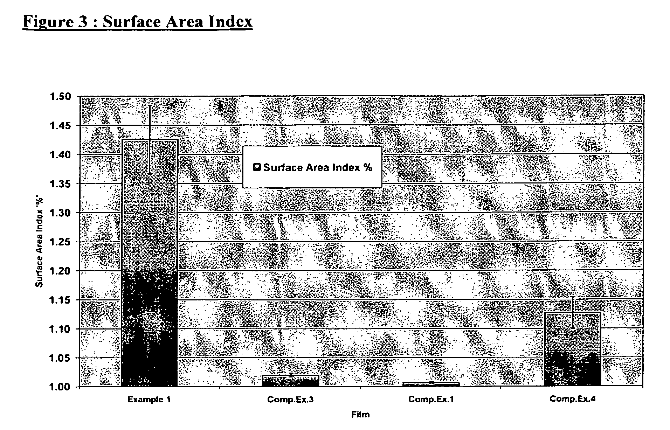

The surface roughness characteristics of the above films were measured using the tests described herein, and the results are shown in Table 6 below, and in Figures 1 to 3.

**TABLE 3 : ANTIMICROBIAL ACTIVITY**

| **EXAMPLE** | **MRSA/Urine** | **E-Coli/Urine** | **MRSA/Water** | **E-Coli/Wate**r | **MRSA/BSA** | **E-Coli/BSA** |
|---|---|---|---|---|---|---|
| | **Log Reduction After 3/6/12/24 hrs** | **Log Reduction After 3/6/12/24 hrs** | **Log Reduction After 3/6/12/24 hrs** | **Log Reduction After 3/6/12/24 hrs** | **Log Reduction After 3/6/12/24 hrs** | **Log Reduction After 3/6/12/24 hrs** |
| 1 | N/M | N/M | N/M | N/M | N/M | N/M |
| 2 | N/M | N/M | N/M | N/M | N/M | N/M |
| 3 | 0.5/3.0/4.7/5.0 | 0.3/1.0/4.8/5.0 | 3.2/4.7/5.2/4.9 | 4.3/5.0/5.8/5.8 | 0.7/4.8/4.9/4.9 | 0.2/1.3/5.5/5.0 |
| 4 | 0.8/3.0/4.7/5.0 | 0.3/1.0/4.8/5.0 | 3.3/4.4/5.2/4.9 | 4.9/5.0/5.8/5.8 | 1.0/4.3/4.9/4.9 | 0.0/1.0/5.5/5.0 |
| 5 | 1.0/3.0/4.7/5.0 | 0.3/1.2/4.8/5.0 | 4.0/5.0/5.2/4.9 | 4.9/5.0/5.8/5.8 | 1.1/4.9/4.9/4.9 | 0.2/1.0/5.5/5.0 |

| | | | | | | |
|---|---|---|---|---|---|---|
| N/M : not measured | | | | | | |

**TABLE 4 - ANTIMICROBIAL ACTIVITY (Scenario Method)**

| **EXAMPLE** | **E-Coli Food Splashes** | **MRSA Urine Splashes** | **E-Coli Urine Splashes** |
|---|---|---|---|
| | **Log Reduction After 3/6/12/24 hrs** | **Log Reduction After 3/6/12/24 hrs** | **Log Reduction After 3/6/12/24 hrs** |
| C.Ex.1 | 0.0/0.0/0.2/1.5 | N/M | N/M |
| C.Ex.2 | 0.0/0.0/0.2/0.7 | N/M | N/M |
| C.Ex.3 | 0.2/0.3/0.3/0.6 | N/M | N/M |
| C.Ex.4 | N/M | N/M | N/M |
| 1 | 0.5/1.0/5.6/5.6 | 1.8/3.3/5.0/5.0 | 2.1/5.2/5.2/5.2 |
| 2 | N/M | N/M | N/M |
| 3 | 0.3/0.5/1.1/3.5 | 0.9/2.3/4.0/4.7 | 3.0/4.8/4.8/4.8 |
| 4 | 0.3/0.6/1.2/4.8 | 0.9/1.9/3.8/4.7 | 4.8/4.8/4.8/4.8 |
| 5 | 1.2/1.3/5.6/5.6 | 1.5/3.3/5.0/5.0 | 1.9/5.2/5.2/5.2 |

| | | | |
|---|---|---|---|
| N/M : not measured | | | |

**TABLE 5 : DURABILITY TESTING**

| **Example** | **Adhesion (TESA)** | **Dry rub resistance** | **Wet rub resistance** | **IPA rub resistance** | **Domestos rub resistance** | |
|---|---|---|---|---|---|---|
| | **Appearance after test** | **Appearance after test** | **Appearance after test** | **Appearance after test** | **Appearance after test** | |
| | | | | | A | B |
| C.Ex.4 | Poor - Coating rubs off | Poor - Coating rubs off | Poor - Coating rubs off | Poor - Coating rubs off | Poor - Coating rubs off | Not tested |
| 1 | Good - 100% | Good- No visible change | Good- No visible change | Good- No visible change | Good- No visible change | Good- No visible change |
| 3 | Good - 100% | Small haze change due to remaining tissue particles on surface. Otherwise no visible change | Good- No visible change | See residue pattern where IPA tissue contacted surface. Otherwise no visible change | Good- No visible change | Not tested |
| 4 | Good - 100% | Small haze change due to remaining tissue particles on surface. Otherwise no visible change | Good- No visible change | See residue pattern where IPA tissue contacted surface. Otherwise no visible change | Good- No visible change | Not tested |

**Table 6: Surface Roughness Characteristics**

| **Example** | **Ra/nm (S.D.)** | **Rq/nm (S.D.)** | **Rpm/nm (S.D.)** | **Rp/nm (S.D.)** | **Surface Area Index (S.D.)** | **95% PV/µm (S.D.)** | **Average Slope (°)** |
|---|---|---|---|---|---|---|---|
| **Example 1** | 516.03 | 620.72 | 6778 | 7786 | 1.43 | 2.03 | 19.9 |
| | (69.90) | (80.79) | (1589) | (1893) | (0.06) | (0.26) | |
| **Comp.Ex.1** | 61.73 | 90.31 | 3188 | 5485 | 1.01 | 0.31 | 1.1 |
| | (11.41) | (15.47) | (1336) | (2826) | (0.00) | (0.05) | |
| **Comp.Ex.3** | 126.60 | 162.75 | 2412 | 3109 | 1.02 | 0.61 | 4.3 |
| | (8.00) | (10.79) | (145) | (460) | (0.00) | (0.05) | |
| **Comp.Ex.4** | 104.19 | 196.40 | 4898 | 5558 | 1.13 | 0.52 | 6.7 |
| | (15.09) | (24.34) | (24) | (240) | (0.03) | (0.09) | |

## Claims

1. A method of manufacture of an anti-microbial polymeric film, said method comprising:
(a) coextruding a polymeric substrate layer comprising a first layer of a first polymeric material and a second layer of a second polymeric material wherein the crystalline melting temperature (T_{M}2) of said second polymeric material is lower than the crystalline melting temperature (T_{M}1) of the first polymeric material;
(b) stretching the coextruded substrate in a first direction
(c) optionally stretching the substrate layer in a second, orthogonal direction;
(d) disposing on the surface of the polymeric second layer a composition comprising a particulate antimicrobial compound and a liquid vehicle, and preferably also a surfactant; and
(e) heat-setting the stretched film at a temperature above the crystalline melting temperature (T_{M}2) of the second polymeric material but below the crystalline melting temperature (T_{M}1) of the first polymeric material;
wherein step (d) is prior to step (b), or between steps (b) and (c), or after step (c), and before step (e);
such that in the final film said second layer comprises said anti-microbial compound in an amount of from about 1 to about 80 % by weight of said polymeric material of the second layer.

2. A method according to claim 1 wherein said composition further comprises a surfactant and/or said liquid vehicle is water.

3. An anti-microbial polymeric film comprising a coextruded stretched and heat-set polymeric substrate layer comprising a first layer of a first polymeric material and a second layer of a second polymeric material, wherein:
(i) the crystalline melting temperature (T_{M}2) of said second polymeric material is lower than the crystalline melting temperature (T_{M}1) of the first polymeric material; and
(ii) said second layer comprises a particulate anti-microbial compound in an amount of from about 1 to about 80 % by weight of said polymeric material of the second layer, wherein said anti-microbial compound is applied via a liquid vehicle to the exposed surface of the second layer prior to heat-setting the coextruded film and wherein at least some of the anti-microbial particles are partially encapsulated by the polymeric material of the second layer so that the particles are held in place by, but not submerged within, the polymeric matrix.

4. A method or film according to any preceding claim wherein the exposed surface of the second layer exhibits a Surface Area Index of at least 1.10 and/or an Average Surface Slope of at least 6°.

5. An anti-microbial polymeric film comprising a coextruded polymeric substrate layer comprising a first layer of a first polymeric material and a second layer of a second polymeric material, wherein:
(i) the crystalline melting temperature (T_{M}2) of said second polymeric material is lower than the crystalline melting temperature (T_{M}1) of the first polymeric material;
(ii) said second layer comprises a particulate anti-microbial compound in an amount of from about 1 to about 80 % by weight of said polymeric material of the second layer; and
(iii) the exposed surface of the second layer exhibits a Surface Area Index of at least 1.10 and/or an Average Surface Slope of at least 6°.

6. A method or film according to any preceding claim wherein the second layer comprises a particulate anti-microbial compound in an amount from about 15 to about 80% by weight of said polymeric material of the second layer.

7. A method or film according to any of claims 1 to 5 wherein the second layer comprises a particulate anti-microbial compound in an amount from about 1 to about 15% by weight of said polymeric material of the second layer.

8. A method or film according to any preceding claim wherein the anti-microbial compound is an inorganic compound containing a metal or metal ions selected from silver, copper, zinc, tin, mercury, lead, iron, cobalt, nickel, manganese, arsenic, antimony, bismuth, barium, cadmium and chromium.

9. A method or film according to any preceding claim wherein the anti-microbial compound has the formula
M¹ₐH_{b}A_{c}M²₂(PO₄)₃.nH₂O
wherein:
M¹ is at least one metal ion selected from silver, copper, zinc, tin, mercury, lead, iron, cobalt, nickel, manganese, arsenic, antimony, bismuth, barium, cadmium and chromium;
A is at least one ion selected from an alkali or alkaline earth metal ion;
M² is a tetravalent metal ion;
a and b are positive numbers and c is 0 or a positive number such that (ka + b + mc) = 1;
k is the valence of metal M¹ ;
m is the valence of metal A; and
0≤n≤6.

10. A method or film according to any preceding claim wherein the anti-microbial compound has the formula
AgₐH_{b}A_{c}Zr₂(PO₄)₃.nH₂O
wherein:
A is an alkali or alkaline earth metal ion;
a, b and c are positive numbers such that (a + b + mc) = 1;
m is the valence of metal A;
0≤n≤6.

11. A method or film according to any preceding claim wherein the particle size of the anti-microbial compound is such that the volume distributed mean particle diameter is in the range of from about 0.1 to about 10 µm.

12. A method or film according to any preceding claim wherein the polymeric materials of said first and second layers are selected from polyesters and/or wherein the polymeric material of said first layer is polyethylene terephthalate and/or wherein the polymeric material of said second layer is a copolyester comprising monomeric units derived from ethylene glycol, terephthalic acid and isophthalic acid and/or wherein the substrate is biaxially oriented.

13. A method or film according to any preceding claim wherein the thickness of the second layer is from about 0.1 to about 30% of the thickness of the total substrate and/or wherein the thickness of the second layer is in the range of from about 0.1 to about 10 µm.

14. A method or film according to any preceding claim wherein the thickness T of the second layer is such that the T/D ratio, where D is the volume distributed mean particle diameter of the anti-microbial particles is in the range of 0.3 to 10.

15. A method or film according to any preceding claim wherein the haze of the film is less than 30%.

## Patentansprüche

1. Verfahren zur Herstellung einer antimikrobiellen Polymerfolie, bei dem man:
(a) eine Polymersubstratschicht, die eine erste Schicht aus einem ersten Polymermaterial und eine zweite Schicht aus einem zweiten Polymermaterial umfasst, coextrudiert, wobei die Kristallschmelztemperatur (T_{M}2) des zweiten Polymermaterials niedriger ist als die Kristallschmelztemperatur (T_{M}1) des ersten Polymermaterials;
(b) das coextrudierte Substrat in einer ersten Richtung verstreckt;
(c) gegebenenfalls das Substrat in einer zweiten, orthogonalen Richtung verstreckt;
(d) auf der Oberfläche der zweiten Polymerschicht eine Zusammensetzung, die eine teilchenförmige antimikrobielle Verbindung und ein flüssiges Vehikel und vorzugsweise auch ein Tensid umfasst, abscheidet; und
(e) die verstreckte Folie bei einer Temperatur oberhalb der Kristallschmelztemperatur (T_{M}2) des zweiten Polymermaterials, aber unterhalb der Kristallschmelztemperatur (T_{M}1) des ersten Polymermaterials thermofixiert;
wobei Schritt (d) vor Schritt (b) oder zwischen den Schritten (b) und (c) oder nach Schritt (c) und vor Schritt (e) erfolgt; derart, dass die zweite Schicht in der fertigen Folie die antimikrobielle Verbindung in einer Menge von etwa 1 bis etwa 80 Gew.-%, bezogen auf das Polymermaterial der zweiten Schicht, umfasst.

2. Verfahren nach Anspruch 1, bei dem die Zusammensetzung ferner ein Tensid umfasst und/oder es sich bei dem flüssigen Vehikel um Wasser handelt.

3. Antimikrobielle Polymerfolie, umfassend eine coextrudierte verstreckte und thermofixierte Polymersubstratschicht, die eine erste Schicht aus einem ersten Polymermaterial und eine zweite Schicht aus einem zweiten Polymermaterial umfasst, wobei:
(i) die Kristallschmelztemperatur (T_{M}2) des zweiten Polymermaterials niedriger ist als die Kristallschmelztemperatur (T_{M}1) des ersten Polymermaterials; und
(ii) die zweite Schicht eine teilchenförmige antimikrobielle Verbindung in einer Menge von etwa 1 bis etwa 80 Gew.-%, bezogen auf das Polymermaterial der zweiten Schicht, umfasst, wobei die antimikrobielle Verbindung vor dem Thermofixieren der coextrudierten Folie mit Hilfe eines flüssigen Vehikels auf die freiliegende Oberfläche der zweiten Schicht aufgebracht wird und wobei mindestens ein Teil der antimikrobiellen Teilchen teilweise durch das Polymermaterial der zweiten Schicht eingekapselt werden, so dass die Teilchen durch die Polymermatrix festgehalten werden, aber nicht darin untergetaucht sind.

4. Verfahren bzw. Folie nach einem der vorhergehenden Ansprüche, wobei die freiliegende Oberfläche der zweiten Schicht einen Surface Area Index von mindestens 1,10 und/oder einen Average Surface Slope von mindestens 6° aufweist.

5. Antimikrobielle Polymerfolie, umfassend eine coextrudierte Polymersubstratschicht, die eine erste Schicht aus einem ersten Polymermaterial und eine zweite Schicht aus einem zweiten Polymermaterial umfasst, wobei:
(i) die Kristallschmelztemperatur (T_{M}2) des zweiten Polymermaterials niedriger ist als die Kristallschmelztemperatur (T_{M}1) des ersten Polymermaterials;
(ii) die zweite Schicht eine teilchenförmige antimikrobielle Verbindung in einer Menge von etwa 1 bis etwa 80 Gew.-%, bezogen auf das Polymermaterial der zweiten Schicht, umfasst; und
(iii) die freiliegende Oberfläche der zweiten Schicht einen Surface Area Index von mindestens 1,10 und/oder einen Average Surface Slope von mindestens 6° aufweist.

6. Verfahren bzw. Folie nach einem der vorhergehenden Ansprüche, wobei die zweite Schicht eine teilchenförmige antimikrobielle Verbindung in einer Menge von etwa 15 bis etwa 80 Gew.-%, bezogen auf das Polymermaterial der zweiten Schicht, umfasst.

7. Verfahren bzw. Folie nach einem der Ansprüche 1 bis 5, wobei die zweite Schicht eine teilchenförmige antimikrobielle Verbindung in einer Menge von etwa 1 bis etwa 15 Gew.-%, bezogen auf das Polymermaterial der zweiten Schicht, umfasst.

8. Verfahren bzw. Folie nach einem der vorhergehenden Ansprüche, wobei es sich bei der antimikrobiellen Verbindung um eine anorganische Verbindung mit einem Metall oder Metallionen, ausgewählt aus Silber, Kupfer, Zink, Zinn, Quecksilber, Blei, Eisen, Cobalt, Nickel, Mangan, Arsen, Antimon, Bismut, Barium, Cadmium und Chrom, handelt.

9. Verfahren bzw. Folie nach einem der vorhergehenden Ansprüche, wobei die antimikrobielle Verbindung die Formel
M¹ₐH_{b}A_{c}M²₂(PO₄)₃.nH₂O
aufweist, wobei:
M¹ für mindestens ein Metallion steht, das aus Silber, Kupfer, Zink, Zinn, Quecksilber, Blei, Eisen, Cobalt, Nickel, Mangan, Arsen, Antimon, Bismut, Barium, Cadmium und Chrom ausgewählt ist;
A für mindestens ein Ion steht, das aus einem Alkali- oder Erdalkalimetallion ausgewählt ist;
M² für ein vierwertiges Metallion steht;
a und b für positive Zahlen stehen und c für 0 oder eine positive Zahl steht, derart, dass (ka + b + mc) = 1;
k für die Wertigkeit des Metalls M¹ steht;
m für die Wertigkeit des Metalls A steht; und
0 ≤ n ≤ 6.

10. Verfahren bzw. Folie nach einem der vorhergehenden Ansprüche, wobei die antimikrobielle Verbindung die Formel
AgₐH_{b}A_{c}Zr₂(PO₄)₃.nH₂O
aufweist, wobei:
A für ein Alkali- oder Erdalkalimetallion steht;
a, b und c für positive Zahlen stehen, derart,
dass (a + b + mc) = 1;
m für die Wertigkeit des Metalls A steht;
0 ≤ n ≤ 6.

11. Verfahren bzw. Folie nach einem der vorhergehenden Ansprüche, wobei die antimikrobielle Verbindung eine derartige Teilchengröße aufweist, dass der volumenverteilte mittlere Teilchendurchmesser im Bereich von etwa 0,1 bis etwa 10 µm liegt.

12. Verfahren bzw. Folie nach einem der vorhergehenden Ansprüche, wobei die Polymermaterialen der ersten und zweiten Schicht aus Polyestern ausgewählt sind und/oder wobei es sich bei dem Polymermaterial der ersten Schicht um Polyethylenterephthalat handelt und/oder wobei es sich bei dem Polymermaterial der zweiten Schicht um einen Copolyester, der von Ethylenglykol, Terephthalsäure und Isophthalsäure abgeleitete Monomereinheiten umfasst, handelt und/oder wobei das Substrat biaxial oxientiert ist.

13. Verfahren bzw. Folie nach einem der vorhergehenden Ansprüche, wobei die Dicke der zweiten Schicht etwa 0,1 bis etwa 30% der Dicke des gesamten Substrats ausmacht und/oder wobei die Dicke der zweiten Schicht im Bereich von etwa 0,1 bis etwa 10 µm liegt.

14. Verfahren bzw. Folie nach einem der vorhergehenden Ansprüche, wobei die zweite Schicht eine derartige Dicke T aufweist, dass das T/D-Verhältnis, wobei D für den volumenverteilten mittleren Teilchendurchmesser der antimikrobiellen Teilchen steht, im Bereich von 0,3 bis 10 liegt.

15. Verfahren bzw. Folie nach einem der vorhergehenden Ansprüche, wobei die Trübung der Folie weniger als 30% beträgt.

## Revendications

1. Procédé de fabrication d'un film polymère antimicrobien, ledit procédé comprenant :
(a) la coextrusion d'une couche de substrat polymère comprenant une première couche d'un premier matériau polymère et une deuxième couche d'un deuxième matériau polymère, le point de fusion cristalline (T_{M}2) dudit deuxième matériau polymère étant inférieur au point de fusion cristalline (T_{M}1) du premier matériau polymère ;
(b) l'étirage du substrat coextrudé dans une première direction ;
(c) éventuellement, l'étirage de la couche de substrat dans une deuxième direction, orthogonale ;
(d) le dépôt sur la surface de la deuxième couche polymère d'une composition comprenant un composé antimicrobien particulaire et un véhicule liquide, et de préférence également un tensioactif ; et
(e) le fixage thermique du film étiré à une température supérieure au point de fusion cristalline (T_{M}2) du deuxième matériau polymère, mais inférieure au point de fusion cristalline (T_{M}1) du premier matériau polymère ;
dans lequel l'étape (d) se situe avant l'étape (b), ou entre les étapes (b) et (c), ou après l'étape (c), et avant l'étape (e) ;
de telle sorte que dans le film final, ladite deuxième couche comprend ledit composé antimicrobien dans une quantité d'environ 1 à environ 80 % en poids dudit matériau polymère de la deuxième couche.

2. Procédé selon la revendication 1 dans lequel ladite composition comprend également un tensioactif et/ou ledit véhicule liquide est l'eau.

3. Film polymère antimicrobien comprenant une couche de substrat polymère coextrudée, étirée et fixée thermiquement comprenant une première couche d'un premier matériau polymère et une deuxième couche d'un deuxième matériau polymère, dans lequel :
(i) le point de fusion cristalline (T_{M}2) dudit deuxième matériau polymère est inférieur au point de fusion cristalline (T_{M}1) du premier matériau polymère ; et
(ii) ladite deuxième couche comprend un composé antimicrobien particulaire dans une quantité d'environ 1 à environ 80 % en poids dudit matériau polymère de la deuxième couche, ledit composé antimicrobien étant appliqué par l'intermédiaire d'un véhicule liquide à la surface exposée de la deuxième couche avant de fixer thermiquement le film coextrudé, et au moins certaines des particules antimicrobiennes étant partiellement encapsulées par le matériau polymère de la deuxième couche de telle sorte que les particules sont maintenues en place par, mais pas noyées à l'intérieur de, la matrice polymère.

4. Procédé ou film selon l'une quelconque des revendications précédentes dans lequel la surface exposée de la deuxième couche présente un indice de surface d'au moins 1,10 et/ou une pente moyenne de surface d'au moins 6°.

5. Film polymère antimicrobien comprenant une couche de substrat polymère coextrudée comprenant une première couche d'un premier matériau polymère et une deuxième couche d'un deuxième matériau polymère, dans lequel ;
(i) le point de fusion cristalline (T_{M}2) dudit deuxième matériau polymère est inférieur au point de fusion cristalline (T_{M}1) du premier matériau polymère ;
(ii) ladite deuxième couche comprend un composé antimicrobien particulaire dans une quantité d'environ 1 à environ 80 % en poids dudit matériau polymère de la deuxième couche ; et
(iii) la surface exposée de la deuxième couche présente un indice de surface d'au moins 1,10 et/ou une pente moyenne de surface d'au moins 6°.

6. Procédé ou film selon l'une quelconque des revendications précédentes dans lequel la deuxième couche comprend un composé antimicrobien particulaire dans une quantité d'environ 15 à environ 80 % en poids dudit matériau polymère de la deuxième couche.

7. Procédé ou film selon l'une quelconque des revendications 1 à 5 dans lequel la deuxième couche comprend un composé antimicrobien particulaire dans une quantité d'environ 1 à environ 15 % % en poids dudit matériau polymère de la deuxième couche.

8. Procédé ou film selon l'une quelconque des revendications précédentes dans lequel le composé antimicrobien est un composé inorganique contenant un métal ou des ions métalliques choisis parmi l'argent, le cuivre, le zinc, l'étain, le mercure, le plomb, le fer, le cobalt, le nickel, le manganèse, l'arsenic, l'antimoine, le bismuth, le baryum, le cadmium et le chrome.

9. Procédé ou film selon l'une quelconque des revendications précédentes dans lequel le composé antimicrobien répond à la formule
M¹ₐH_{b}A_{c}M²₂(PO₄)₃.nH₂O
dans laquelle :
M¹ représente au moins un ion métallique choisi parmi l'argent, le cuivre, le zinc, l'étain, le mercure, le plomb, le fer, le cobalt, le nickel, le manganèse, l'arsenic, l'antimoine, le bismuth, le baryum, le cadmium et le chrome ;
A représente au moins un ion choisi parmi un ion de métal alcalin ou alcalino-terreux ;
M² représente un ion métallique tétravalent ;
a et b sont des nombres positifs et c vaut 0 ou est un nombre positif tel que (ka + b + mc) = 1 ;
k est la valence du métal M¹ ;
m est la valence du métal A ; et
0 ≤ n ≤ 6.

10. Procédé ou film selon l'une quelconque des revendications précédentes dans lequel le composé antimicrobien répond à la formule
AgₐH_{b}A_{c}Zr₂(PO₄)₃.nH₂O
dans laquelle :
A représente un ion de métal alcalin ou alcalino-terreux ;
a, b et c sont des nombres positifs tels que (a + b + mc) = 1 ;
m est la valence du métal A ; et
0 ≤ n ≤ 6.

11. Procédé ou film selon l'une quelconque des revendications précédentes dans lequel la taille des particules du composé antimicrobien est telle que le diamètre de particule moyen distribué en volume se situe dans la gamme d'environ 0,1 à environ 10 µm.

12. Procédé ou film selon l'une quelconque des revendications précédentes dans lequel les matériaux polymères desdites première et deuxième couches sont choisis parmi les polyesters et/ou dans lequel le matériau polymère de ladite première couche est le téréphtalate de polyéthylène et/ou dans lequel le matériau polymère de ladite deuxième couche est un copolyester comprenant des motifs monomères dérivés de l'éthylène glycol, de l'acide téréphtalique et de l'acide isophtalique et/ou dans lequel le substrat est orienté biaxialement.

13. Procédé ou film selon l'une quelconque des revendications précédentes dans lequel l'épaisseur de la deuxième couche est égale à environ 0,1 à environ 30 % de l'épaisseur du substrat total et/ou dans lequel l'épaisseur de la deuxième couche se situe dans la gamme d'environ 0,1 à environ 10 µm.

14. Procédé ou film selon l'une quelconque des revendications précédentes dans lequel l'épaisseur T de la deuxième couche est telle que le rapport T/D, où D est le diamètre de particule moyen distribué en volume des particules antimicrobiennes, se situe dans la gamme de 0,3 à 10.

15. Procédé ou film selon l'une quelconque des revendications précédentes dans lequel le trouble du film est inférieur à 30 %.
